# EUROPÄISCHE PATENTANMELDUNG

(11) **EP 4 621 116 A1**
(43) Veröffentlichungstag der Anmeldung: **24.09.2025**
(21) Anmeldenummer: 25162530.7
(22) Anmeldetag: 10.03.2025
(51) Int. Cl.: D01H 4/44

(54) **VERFAHREN ZUM ÜBERWACHEN EINES ZUSTANDS EINER ELEKTROMAGNETISCHEN VERRIEGELUNGSVORRICHTUNG FÜR EINE SPINNSTELLE EINER ROTORSPINNMASCHINE**

(30) Priorität: 19.03.2024 LU 506620
(71) Anmelder: Saurer Spinning Solutions GmbH & Co. KG, 52531 Übach-Palenberg (DE)
(72) Erfinder: Balboul, Nour-Eddine, 50969 Köln (DE)
(74) Vertreter: Schniedermeyer, Markus

(57) **Zusammenfassung**

Die Erfindung betrifft Verfahren zum Überwachen eines Zustands einer Verriegelungsvorrichtung für eine Spinnstelle einer Rotorspinnmaschine, umfassend die nachfolgenden Schritte:
- Erzeugen zweier Stromimpulse in einer zeitlichen Abfolge, wobei ein zweiter Stromimpuls eine einem ersten Stromimpuls im Vorzeichen entgegengesetzte Amplitude aufweist, wobei die zeitliche Abfolge durch eine Schalteinheit einer Steuereinrichtung der Spinnstelle gesteuert wird,
- Bestimmen jeweils eines Messwerts bezüglich der jeweiligen Stromimpulse in Abhängigkeit von einem Schaltvorgang durch die Schalteinheit,
- Ermitteln einer Differenz zwischen den jeweiligen Messwerten,
- Auswerten der Differenz auf Basis eines Vergleichs mit einem Referenzwertebereich, wobei der Referenzwertebereich spezifisch dafür ist, ob sich die Verriegelungsvorrichtung in einem geschlossenen oder offenen Zustand befindet,
- Feststellen eines Zustands der Verriegelungsvorrichtung in Abhängigkeit von dem Ergebnis des Auswertens.

Ferner betrifft die Erfindung eine Rotorspinnmaschine sowie ein Computerprogramm.

## Beschreibung

Die vorliegende Erfindung betrifft ein Verfahren zum Überwachen eines Zustands einer elektromagnetischen Verriegelungsvorrichtung für eine Spinnstelle einer Rotorspinnmaschine. Ferner bezieht sich die Erfindung auf eine Rotorspinnmaschine, ein Computerprogramm sowie eine Vorrichtung zu diesem Zweck.

### Stand der Technik

Aus dem Stand der Technik sind Offenend-Rotorspinnmaschinen mit einer oder mehreren Spinnstellen bekannt. Ein jeweiliger Spinnrotor für die Spinnstelle befindet sich dabei in einem Rotorgehäuse, welches von einem Deckel abgedeckt ist. Das Öffnen des Rotorgehäuses, das heißt das Öffnen des Deckels darf nur erfolgen, wenn der Rotor ausreichend abgebremst wurde. Ansonsten bestünde die Gefahr einer Verletzung eines Bedieners durch den sich noch drehenden Rotor oder durch Teile der Spinnmaschine. Wird ferner die Ansteuerung für den Rotormotor überprüft, so wird bei einer effizienten Überwachung des Antriebs einerseits sichergestellt, dass kein fehlerhaftes Garn produziert wird. Andererseits wird ebenfalls sichergestellt, dass der Rotor, welcher derzeit Drehzahlen im Bereich von mehr als 100.000 Umdrehungen/min erreichen kann, durch einen fehlerhaften Betrieb nicht zerstört wird und so zur Gefährdung des Personals und zur Zerstörung der Rotorspinnmaschine führen könnte.

Einzelmotorisch angetriebene Spinnrotoren werden in der Regel bspw. elektrisch abgebremst. Das heißt, bei solchen Antrieben wird zum Anhalten der Spinnrotoren einfach die Stromrichtung des Motorstromes umgekehrt. Durch einen solchen Bremsstrom können einzelmotorisch angetriebene Spinnrotoren in kürzester Zeit und sehr materialschonend abgebremst werden. Allerdings müssen bei diesen einzelmotorisch angetriebenen, magnetisch gelagerten Spinnrotoren zusätzliche Maßnahmen getroffen werden, die sicherstellen, dass der Spinnrotor vor dem Öffnen des Rotorgehäuses nur noch unterhalb einer vorgegebenen Drehzahlgrenze rotiert und insbesondere, dass das Rotorgehäuse vor einem Neustart des Spinnrotors auch vorschriftsmäßig geschlossen ist. Die bekannten Offenend-Spinnvorrichtungen mit einzelmotorisch angetriebenen, magnetisch gelagerten Spinnrotoren sind deshalb mit Sensoreinrichtungen ausgestattet, die das ordnungsgemäße Verschließen des Rotorgehäuses überwachen können. Allerdings sind die bekannten Lösungen für eine Überwachung oftmals nicht ausreichend zuverlässig, um den ordnungsgemäßen Schließzustand korrekt festzustellen. Daher kann eine Gefahr einer Beschädigung der Maschine und eine Verletzungsgefahr für das Bedienungspersonal bestehen.

### Offenbarung der Erfindung

Es ist daher eine Aufgabe der vorliegenden Erfindung, die voranstehend beschriebenen Nachteile zumindest teilweise zu beheben. Insbesondere ist es Aufgabe der vorliegenden Erfindung ein Verfahren für eine Spinnstelle einer Rotorspinnmaschine bereitzustellen, welches nicht von Fertigungstoleranzen bei Spulen und deren daher schwankenden Induktivitäten abhängig ist. Ferner ist eine weitere Aufgabe der Erfindung ein sicheres Starten und/oder Stoppen eines Rotors einer Rotorspinnmaschine zu verbessern, um Schäden an Mensch und Material zu vermeiden.

Gegenstand der Erfindung ist ein Verfahren mit den Merkmalen des Anspruchs 1, eine Rotorspinnmaschine mit den Merkmalen des Anspruchs 12, ein Computerprogramm mit den Merkmalen des Anspruchs 13 sowie eine Vorrichtung mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Rotorspinnmaschine, dem erfindungsgemäßen Computerprogramm sowie der erfindungsgemäßen Vorrichtung, und jeweils umgekehrt, sodass bezüglich der Offenbarung zu den einzelnen Erfindungsaspekten stets wechselseitig Bezug genommen wird bzw. werden kann.

Gegenstand der Erfindung ist insbesondere ein Verfahren zum Überwachen eines Zustands einer Verriegelungsvorrichtung für eine Spinnstelle einer Rotorspinnmaschine, umfassend die nachfolgenden Schritte:
- Erzeugen zweier Stromimpulse in einer zeitlichen Abfolge, wobei ein zweiter Stromimpuls eine einem ersten Stromimpuls im Vorzeichen entgegengesetzte Amplitude aufweist, wobei die zeitliche Abfolge durch eine Schalteinheit einer Steuereinrichtung der Spinnstelle gesteuert wird,
- Bestimmen jeweils eines Messwerts bezüglich der jeweiligen Stromimpulse in Abhängigkeit von einem Schaltvorgang durch die Schalteinheit,
- Ermitteln einer Differenz zwischen den jeweiligen Messwerten,
- Auswerten der Differenz auf Basis eines Vergleichs mit einem Referenzwertebereich, wobei der Referenzwertebereich spezifisch dafür ist, ob sich die Verriegelungsvorrichtung in einem geschlossenen oder offenen Zustand befindet,
- Feststellen eines Zustands der Verriegelungsvorrichtung in Abhängigkeit von dem Ergebnis des Auswertens.

Dies hat den Effekt, dass ein Zustand einer Verriegelungsvorrichtung für eine Spinnstelle einer Rotorspinnmaschine unabhängig von einer Temperaturveränderung an der Spinnstelle festgestellt werden kann. Dies hat den Grund darin, dass die Ermittlung der Differenz zwischen den Messwerten einen Temperatureinfluss kompensiert. Der Temperatureinfluss kann insbesondere eine Umgebungstemperatur an der Spinnstelle und/oder an der Verriegelungsvorrichtung bspw. bei Betriebsstart sein und/oder während des Betriebes. Ferner bewirkt das erfindungsgemäße Verfahren durch das Auswerten der ermittelten Differenz, dass unterschiedlich dimensionierte elektromagnetische Eigenschaften der Verriegelungsvorrichtung referenziert werden können, was die Zuverlässigkeit und Effektivität der Bestimmung des Schließzustands der Verriegelungsvorrichtung vorteilhafterweise verbessert. Ferner ermöglicht dies, dass die ermittelte Differenz von dem Einfluss einer schwankenden Induktivität entkoppelt werden kann.

Die Verriegelungsvorrichtung verriegelt dabei vorzugsweise ein Deckelelement eines Rotorgehäuses der Spinnstelle. Die Verriegelungsvorrichtung verhindert dabei vorzugsweise ein unzulässiges Öffnen der Deckelelementes. Aus den eingangs beschriebenen Gründen ist die Überwachung des Zustandes der Verriegelungsvorrichtung von besonderer Bedeutung.

Die Verriegelungsvorrichtung umfasst dabei vorzugsweise einen elektromagnetischen Aktor. Die Stromimpulse zur Überwachung des Verriegelungszustandes können vorzugsweise in der gleichen elektrischen Spule erzeugt werden, die auch der Verriegelung und/oder Entriegelung der Verriegelungsvorrichtung dienen.

Vorteilhaft ist es darüber hinaus, wenn im Rahmen der Erfindung das Bestimmen des Messwerts den nachfolgenden Schritt umfasst:
- Bestimmen einer Zeitdauer tₓ eines Anstiegs des jeweiligen Stromimpulses als Messwert in Abhängigkeit von dem Schaltvorgang durch die Schalteinheit, wobei der Schaltvorgang beim Erreichen eines festgelegten Stromwertes oder eines korrespondierenden Spannungswertes durch die Schalteinheit erfolgt.

Dies bewirkt, dass die bestimmte oder gemessene Zeitdauer bezüglich des jeweiligen Stromimpulses eine entsprechende Messgröße mit einem Messwert bereitstellt, um einen Zustand der Verriegelungsvorrichtung festzustellen. Eine zu dem Strom korrespondierende Spannung kann dabei bevorzugt über einen Messwiderstand gemessen werden.

Vorzugsweise wird die Zeitdauer während des Anstiegs des Stromimpulses überwacht. Wenn die Zeitdauer einen vorgegebenen maximalen Wert tₘₐₓ erreicht hat, ohne dass ein Schaltvorgang erfolgt ist, bzw. ohne dass der festgelegte Stromwert oder der korrespondierende Spannungswert erreicht worden sind, wird der Vorgang abgebrochen und/oder ein Fehler angezeigt. Ein solcher Fehler kann zum Beispiel durch eine nicht richtig angeschlossene Verriegelungsvorrichtung hervorgerufen werden, sodass kein Strom fließen kann und der festgelegte Stromwert nicht erreicht werden kann.

Optional ist es denkbar, dass das Bestimmen des Messwerts den nachfolgenden Schritt umfasst:
- Bestimmen eines Amplitudenwerts des jeweiligen Stromimpulses als Messwert in Abhängigkeit von dem Schaltvorgang durch die Schalteinheit, wobei die Impulsdauer der beiden Stromimpulse identisch ist, wobei der Schaltvorgang durch die Schalteinheit beim Erreichen einer festgelegten Zeitdauer des Stromimpulses erfolgt.

Dies ermöglicht es, dass alternativ zur Bestimmung von jeweiligen Zeitdauern der jeweils bestimmte Stromamplitudenwert verwendet werden kann, um einen Zustand der Verriegelungsvorrichtung festzustellen.

Auch ist es optional denkbar, dass das Auswerten den weiteren nachfolgenden Schritt umfasst:
- Prüfen, ob die ermittelte Differenz oberhalb, unterhalb oder innerhalb des Referenzwertebereichs liegt, wobei der Referenzwertebereich durch einen oberen und einen unteren Referenzwert definiert ist, und,
   wenn das Ergebnis der Prüfung zeigt, dass die Differenz oberhalb des Referenzwertebereichs liegt, dann ist die Verriegelungsvorrichtung im geschlossenen Zustand, oder,
   wenn das Ergebnis der Prüfung zeigt, dass die Differenz unterhalb des Referenzwertebereichs liegt, dann ist die Verriegelungsvorrichtung im offenen Zustand, oder, wenn das Ergebnis der Prüfung zeigt, dass die Differenz innerhalb des Referenzwertebereichs liegt, dann ist der Zustand der Verriegelungsvorrichtung gestört.

Diese Prüfung der ermittelten Differenz ermöglicht, dass je nach dem Ergebnis des Prüfens in Abhängigkeit von dem festgelegten Referenzwertebereichs eine effektivere und effiziente Feststellung des Schließzustands der Verriegelungsvorrichtung getroffen werden.

In einer weiteren Möglichkeit kann vorgesehen sein, dass der Referenzwertebereich in Abhängigkeit der elektromagnetischen Eigenschaften eines Hubmagneten der Verriegelungsvorrichtung spezifiziert ist. Es kann ferner möglich sein, dass der Referenzwertebereich durch einen oberen und einen unteren Referenzwert definiert ist, wobei der obere Referenzwert einem Wert von 3000 und der untere Referenzwert einem Wert von 300 entspricht.

Dies ermöglicht es, dass mögliche Fertigungstoleranzen bei der Herstellung von Spulen und daraus resultierenden Induktivitäten für den Referenzwertebereich vorteilhafterweise berücksichtigt bzw. miteinbezogen werden können, um die Effektivität oder Zuverlässigkeit bei der Feststellung des Zustands zu erhöhen. So können je nach Wahl und Dimensionierung des Hubmagneten für die Verriegelungsvorrichtung flexibel entsprechende Referenzbereiche vorgegeben werden.

Es kann im Rahmen der Erfindung vorgesehen sein, dass das Verfahren den nachfolgenden Schritt umfasst:
- Initiieren einer Ausgabe, wenigstens einer Zustandsinformation, basierend auf dem festgestellten Zustand.

Dies bewirkt, dass die Steuereinrichtung eine Zustandsinformation bspw. über eine Ausgabeeinheit für einen Bediener bereitstellt bzw. anzeigt, damit dieser über den verriegelten oder entriegelten Zustand der Verriegelungsvorrichtung informiert wird und entsprechende Steuerungsmaßnahmen an der Rotorspinnmaschine einleiten kann. Ferner ist denkbar, dass die Ausgabe der Zustandsinformation vorteilhafterweise für weitere automatisierte Steuerungseingriffe an der Rotorspinnmaschine verwendet werden können.

Es kann von Vorteil sein, wenn im Rahmen der Erfindung die Zustandsinformation eine Anweisung zur Unterstützung eines Benutzers der Spinnmaschine umfasst, wobei das Initiieren der Ausgabe zumindest einen der nachfolgenden Schritte umfasst:
- Initiieren einer Aktivierung einer optischen Anzeige an der Rotorspinnmaschine und/oder an der entsprechenden Spinnstelle,
- Initiieren einer Anzeige auf einer Benutzeroberfläche der Steuereinrichtung, wobei die Benutzeroberfläche einen digitalen Zwilling zumindest eines Teils der Rotorspinnmaschine visualisiert,
- Initiieren einer akustischen Ausgabe bezüglich des Zustands der Verriegelungsvorrichtung der Rotorspinnmaschine, insbesondere eines Warnsignals.

Diese alternativen Ausgabevarianten ermöglichen, dass eine schnellere und effektivere Steuerung und Kontrolle der Spinnstelle der Rotorspinnmaschine gewährleistet werden kann. Das Aktivieren der optischen Anzeige oder eine akustische Ausgabe bewirkt, dass der festgestellte Zustand sichtbar oder hörbar gemacht werden kann, um schnell auf eine entsprechende Anzeige reagieren zu können bzw. steuernd einzugreifen. Dies könnte insbesondere ein Anhalten des Rotors an der Spinnstelle oder ein Verhindern des Startens des Rotormotors sein.

Optional kann es vorgesehen sein, dass das Verfahren den nachfolgenden weiteren Schritt umfasst:
- Weiterleiten des festgestellten Zustands der Verriegelungsvorrichtung als Steuersignal an eine Master-Steuereinrichtung zur Steuerung eines Rotormotors der Spinnstelle, wobei die Steuerung des Rotormotors durch ein Anschalten und/oder Abschalten des Rotormotors erfolgt.

Dies bewirkt, dass die Master-Steuereinrichtung basierend auf dem festgestellten Zustand der Verriegelungsvorrichtung kontrollieren kann, ob ein Anschalten oder ein Abschalten des Rotormotors bzw. der Ansteuerung des Rotors erfolgen soll. Bei der Feststellung, dass der Zustand entriegelt ist, würde kein Anschalten des Rotormotors erfolgen, da die Master-Steuereinrichtung erkennen kann, dass die Verriegelungsvorrichtung nicht verriegelt ist. Dies hat den Vorteil, dass dadurch eine Gefahr einer Beschädigung der Rotorspinnmaschine und/oder eine Verletzungsgefahr für das Bedienungspersonal vermieden werden kann.

Es kann weiter möglich sein, dass das Ermitteln der Differenz zwischen den jeweiligen Messwerten in Abhängigkeit einer durch den jeweiligen Stromimpuls induzierten Spannung in der Verriegelungsvorrichtung erfolgt. Dies ermöglicht es, dass die Differenz sehr einfach und genau ermittelt bzw. gemessen werden kann.

Ferner ist es denkbar, dass die Schalteinheit einen Komparator und/oder einen A/D-Wandler aufweist, um die zeitliche Abfolge des jeweiligen Stromimpulses in Abhängigkeit von dem Schaltvorgang zu steuern. Dies bewirkt eine schnelle und genaue Schaltung bzw. Taktung beim Erzeugen der zeitlichen Abfolge der jeweiligen Stromimpulse für die Ermittlung und Auswertung der Differenz zwischen den jeweiligen Messwerten.

Ebenfalls Gegenstand der Erfindung ist eine Rotorspinnmaschine umfassend wenigstens eine Spinnstelle, eine Steuereinrichtung zum Überwachen eines Zustands einer Verriegelungsvorrichtung für die Spinnstelle. Die Steuereinrichtung ist dazu ausgebildet das erfindungsgemäße Verfahren durchzuführen. Damit bringt die erfindungsgemäße Rotorspinnmaschine die gleichen Vorteile mit sich, wie sie ausführlich mit Bezug auf das erfindungsgemäße Verfahren beschrieben worden sind.

Ebenfalls Gegenstand der Erfindung ist ein Computerprogramm, umfassend Befehle, die bei der Ausführung des Computerprogramms durch einen Computer einer Steuereinrichtung diesen veranlassen, das erfindungsgemäße Verfahren auszuführen. Damit bringt das erfindungsgemäße Computerprogramm die gleichen Vorteile mit sich, wie sie ausführlich mit Bezug auf das erfindungsgemäße Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung ist ein computerlesbares Speichermedium, umfassend Befehle, die bei der Ausführung durch einen Computer diesen veranlassen, die Schritte des erfindungsgemäßen Verfahrens auszuführen. Damit bringt das erfindungsgemäße computerlesbare Speichermedium die gleichen Vorteile mit sich, wie sie ausführlich mit Bezug auf das erfindungsgemäße Verfahren beschrieben worden sind. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein. Darüber hinaus kann das erfindungsgemäße Verfahren auch als ein computerimplementiertes Verfahren ausgeführt sein.

Ebenfalls Gegenstand der Erfindung ist eine Vorrichtung zur Datenverarbeitung, umfassend Mittel zur Ausführung des erfindungsgemäßen Verfahrens. Damit bringt die erfindungsgemäße Vorrichtung die gleichen Vorteile mit sich, wie sie ausführlich mit Bezug auf das erfindungsgemäße Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Rotorspinnmaschine, eines Speichermediums sowie eines Computerprogramms gemäß Ausführungsbeispielen der Erfindung,
- Fig. 2: eine schematische Darstellung einer Verriegelungsvorrichtung gemäß den Ausführungsbeispielen der Erfindung,
- Fig. 3: eine weitere schematische Darstellung gemäß den Ausführungsbeispielen der Erfindung,
- Fig. 4: eine andere schematische Darstellung gemäß den Ausführungsbeispielen der Erfindung.

In den nachfolgenden Figuren werden für die gleichen technischen Merkmale auch von unterschiedlichen Ausführungsbeispielen die identischen Bezugszeichen verwendet.

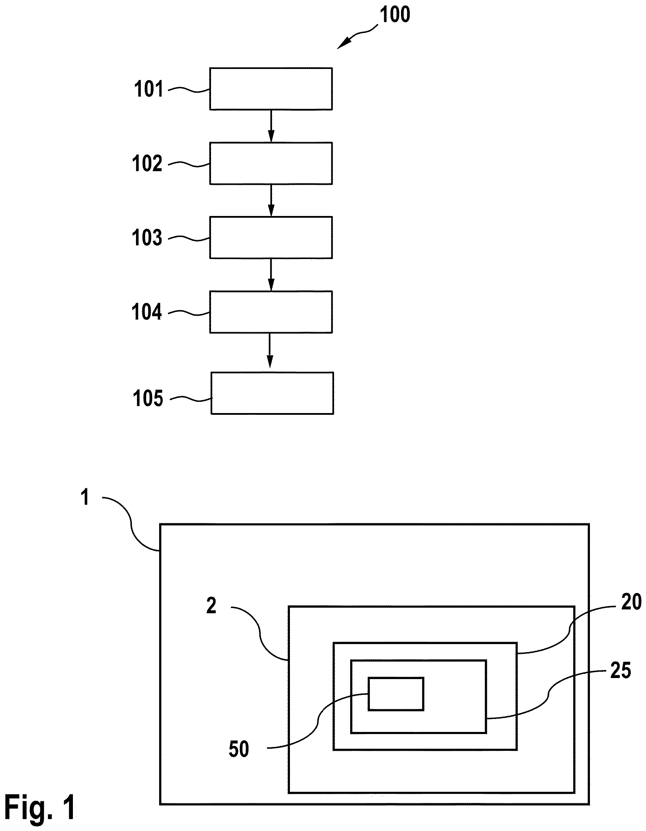

In Figur 1 sind ein Verfahren 100, eine Rotorspinnmaschine 1, ein Speichermedium 25 sowie ein Computerprogramm 50 gemäß den Ausführungsbeispielen der Erfindung schematisch dargestellt. Figur 1 veranschaulicht gemäß den Ausführungsbeispielen der Erfindung ein Verfahren zum Überwachen eines Zustands einer Verriegelungsvorrichtung für eine Spinnstelle 2 einer Rotorspinnmaschine 1 mit den nachfolgenden Schritten:
In Schritt 101 werden zwei Stromimpulse in einer zeitlichen Abfolge erzeugt, wobei ein zweiter Stromimpuls eine einem ersten Stromimpuls im Vorzeichen entgegengesetzte Amplitude aufweist. Die zeitliche Abfolge wird durch eine Schalteinheit einer Steuereinrichtung 20 der Spinnstelle 2 gesteuert. In Schritt 102 wird jeweils ein Messwert bestimmt bezüglich der jeweiligen Stromimpulse in Abhängigkeit von einem Schaltvorgang durch die Schalteinheit. Gemäß Schritt 103 wird dann eine Differenz zwischen den jeweiligen Messwerten ermittelt. In Schritt 104 wird die Differenz auf Basis eines Vergleichs mit einem Referenzwertebereich ausgewertet. Der Referenzwertebereich ist spezifisch dafür, ob sich die Verriegelungsvorrichtung 10 in einem geschlossenen oder offenen Zustand befindet. Dann wird in Schritt 105 ein Zustand der Verriegelungsvorrichtung 10 in Abhängigkeit von dem Ergebnis des Auswertens festgestellt.

Ferner zeigt Figur 1 eine Rotorspinnmaschine 1 umfassend eine Spinnstelle 2, wobei die Spinnstelle 2 eine Steuereinrichtung 20 aufweist, welche ein computerlesbares Speichermedium 25 umfasst. Das Speichermedium 25 umfasst ein Computerprogramm 50.

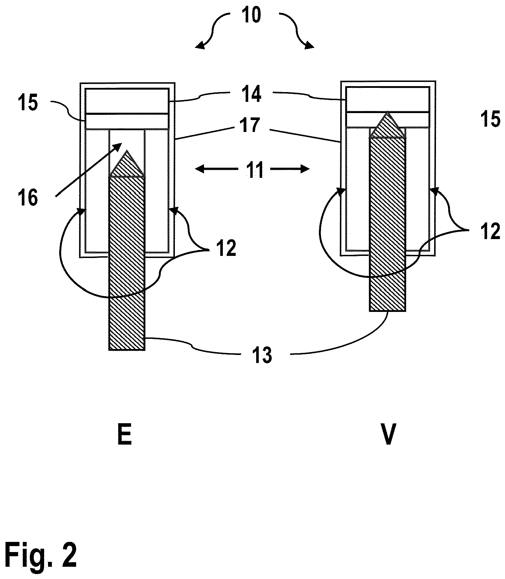

Figur 2 zeigt beispielhaft einen Aufbau der Verriegelungsvorrichtung 10 für eine Spinnstelle 2 gemäß den Ausführungsbeispielen der Erfindung. Die Verriegelungsvorrichtung 10 umfasst vorzugsweise einen elektromagnetischen Aktor, bspw. einen Hubmagneten 11. Der Hubmagnet 11 weist z. B. eine Spule 12 auf, die um einen magnetischen Kern gewickelt ist. Wenn Strom durch die Spule 12 fließt, erzeugt dies ein Magnetfeld um den Tauchkern 13, was dazu führen kann, dass der Hubmagnet 11, insbesondere der Permanentmagnet 14, entweder metallische Objekte wie bspw. einen Tauchkern 13 aus Metall anzieht oder sie abstößt, abhängig von der Polarität des Magnetfelds und der Polarität des beteiligten Objekts. Der magnetische Rückschluss erfolgt dabei über das Joch 17. Ferner weist der Hubmagnet 11 eine Zentrierbuchse 15 für die Fixierung des Tauchkerns 13 im verriegelten Zustand der Verriegelungsvorrichtung 10 auf. Der Hubmagnet 11, manchmal auch als Elektromagnet bezeichnet, kann als eine Vorrichtung, bspw. als Verriegelungsvorrichtung, 10 verwendet werden, die in der Lage ist, durch das Anlegen einer elektrischen Spannung eine magnetische Anziehungskraft zu erzeugen. Dieses magnetische Feld kann dazu verwendet werden, Objekte wie bspw. den Tauchkern 13 anzuziehen oder abzustoßen, je nachdem, wie der Hubmagnet 11 konstruiert ist und wie die elektrische Spannung angewendet wird.

Im verriegelten Zustand, welcher rechts (V) in Figur 2 dargestellt ist, ist der Tauchkern 13 durch den Permanentmagneten 14 und die Zentrierbuchse 15 fest in Position gehalten. Der Permanentmagnet 14 kann ein starkes Magnetfeld erzeugen, das den Tauchkern 13 anzieht und ihn in die Zentrierbuchse 15 hält. Dies gewährleistet eine sichere und präzise Verriegelung des Mechanismus. Das System ist so konzipiert, dass es auch Vibrationen und äußeren Kräften standhält, um unerwünschte Entriegelungen zu verhindern.

Um die Verriegelung zu entriegeln, wie links (E) in Figur 2 abgebildet, wird die Spule 12 aktiviert, indem ein elektrischer Strom durch sie 12 fließt. Dies erzeugt ein gegenläufiges Magnetfeld, das den Tauchkern 13 gegen die Anziehungskraft des Permanentmagneten 14 bewegt. Die Zentrierbuchse 15 sorgt dabei dafür, dass der Tauchkern 13 präzise ausgerichtet wird, um ein reibungsloses Entriegeln zu gewährleisten. Sobald der Tauchkern 13 seine Entriegelungsposition erreicht hat, kann die Verriegelungsvorrichtung 10 bspw. des Rotorgehäuses geöffnet werden.

Ferner kann die Steuereinrichtung 20 eine Schalteinheit (nicht abgebildet) aufweisen. Die Schalteinheit kann einen Komparator und/oder einen A/D-Wandler aufweisen, um die zeitliche Abfolge des jeweiligen Stromimpulses in Abhängigkeit des festgelegten Spannungswerts zu steuern. Ein Komparator in der Steuereinrichtung 20 kann auf verschiedene Arten spezifiziert werden, abhängig von den Anforderungen und dem gewünschten Verhalten in Ihrer Anwendung. So kann ein gewünschter Eingangsspannungsbereich festgelegt werden, über den der Komparator arbeiten soll. Der Bereich kann positive und negative Referenzwerte umfassen. Ferner kann eine erforderliche Hysterese des Komparators berücksichtigt werden. Dies kann bedeuten, dass der Komparator bei einer Differenz zwischen einem festgelegten Referenzwert von "high" auf "low" wechselt, und dem Schwellenwert, bei dem er von "low" auf "high" wechselt oder umgekehrt. Ferner kann auch der *Ausgangszustand des Komparators berücksichtigt* werden. D. h. es kann festgelegt werden, ob der Ausgang des Komparators im inaktiven Zustand "high" oder "low" sein sollte.

Hubmagneten 11 können in einer Vielzahl von Anwendungen eingesetzt werden, wie z. B. Industriemaschinen, Rotorspinnmaschinen 1, Fördersystemen, Schaltungen für Schließmechanismen, in der Robotik, in medizinischen Geräten und vielen anderen Anwendungen, bei denen eine steuerbare magnetische Anziehung oder Abstoßung erforderlich ist. Sie sind besonders nützlich, da sie durch das An- und Abschalten des Stroms die Magnetkraft leicht steuern können, was in vielen Anwendungen von Vorteil ist.

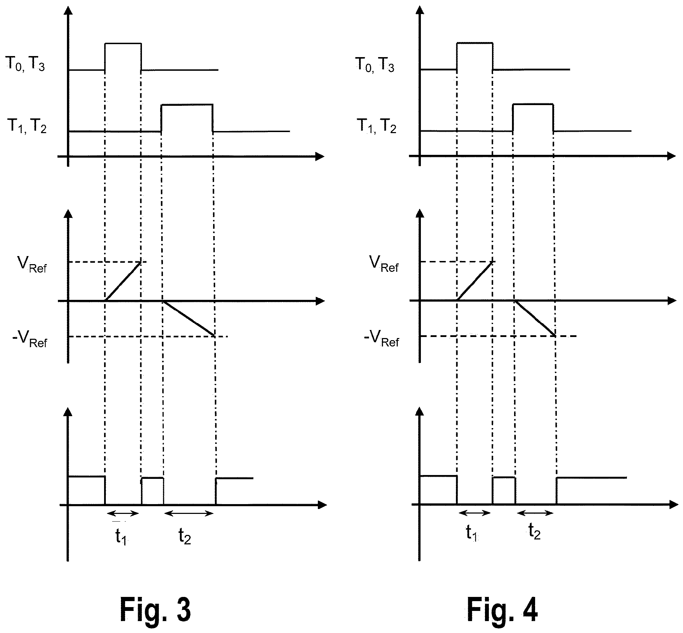

Figur 3 stellt schematisch das erfindungsgemäße Verfahren 100 nach den Ausführungsbeispielen der Erfindung dar. Insbesondere ist in Figur 3 schematisch das Bestimmen der Position des Hubmagneten 11 in einem verriegelten Zustand der Verriegelungsvorrichtung 10 abgebildet.

Der oberste Graph der Figur 3 zeigt die Schaltzustände der Halbleiterschalter T₀, T₁, T₂ und T₃ einer nicht dargestellten H-Brücke zur Bestromung der Spule 12 der Verriegelungsvorrichtung 10. Werden die Schalter T₀ und T₃ angesteuert, fällt über der Spule 12 eine Spannung ab. Entsprechend fällt bei Ansteuerung der Schalter T₁ und T₂ eine Spannung mit umgekehrtem Vorzeichen ab. Der mittlere Graph zeigt den daraus resultieren Strom durch die Spule 12 der Verriegelungsvorrichtung 10. Der untere Graph zeigt den Ausgang eines Komparators, der in dem Ausführungsbeispiel als Schalteinheit einer Steuerungseinrichtung 20 dient. Der Strom wird in dem Ausführungsbeispiel mittels eines Messwiderstandes als stromproportionale Spannung erfasst und mittels des Komparators mit einer stromproportionalen Referenzspannung V_{Ref.} verglichen. Bei Erreichen der Referenzspannung V_{Ref} wird der Strom mittels der Halbleiterschalter T₀ und T₃ bzw. T₁ und T₂ abgeschaltet.

Auf diese Weise werden die jeweiligen Zeitdauern t₁ und t₂ basierend auf den jeweils erzeugten Stromimpulsen ermittelt bzw. gemessen. Dabei wird der Hubmagnet 11 der Verriegelungsvorrichtung 10 jeweils mit einem Stromimpuls beaufschlagt, wobei einer der beiden Stromimpulse eine einem ersten Stromimpuls im Vorzeichen entgegengesetzte Amplitude aufweist. Das bedeutet, dass in einem Fall das durch den Stromimpuls erzeugte Magnetfeld dem Magnetfeld des Permanentmagneten 14 entgegenwirkt (Zeitdauer t₁), in dem anderen Fall verstärkt der Strom das Magnetfeld des Permanentmagneten 14 (Zeitdauer t₂) und kann so den Tauchkern 13 halten (verriegelter Zustand).

Vorzugsweise wird eine maximale Zeitdauer tₘₐₓ festgelegt. Wird die Referenzspannung V_{Ref} nicht innerhalb der maximalen Zeitdauer tₘₐₓ erreicht, kann auf einen Fehler geschlossen werden und die Halbleiterschalter T0, T1, T2 und T3 der H-Brücke werden ausgeschaltet. Auf diese Weise kann bspw. die Steckverbindung zwischen dem Hubmagneten 11 und der Ansteuerung überprüft werden.

Werden nun die beiden gemessenen Zeitdauern t₁ und t₂ bspw. subtrahiert, ergibt sich eine Differenz bzw. ein Differenzwert. Dies bedeutet, dass die Differenz als von der Induktivität "entkoppelt" angesehen werden kann. Insbesondere bedeutet diese Differenzbildung, dass damit jegliche Temperatureinflüsse im Laufe des Betriebs einer Rotorspinnmaschine 1 vermieden werden können und somit temperaturunabhängig der jeweilige Zustand der Verriegelungsvorrichtung 10 sicher und korrekt bestimmt werden kann. Diese ermittelte Differenz wird dann ausgewertet. Die Auswertung basiert auf einem prüfenden Vergleich mit einem Referenzwertebereich. Dieser Referenzwertebereich kann abhängig sein von elektromagnetischen Eigenschaften des Hubmagneten 11. Der Referenzwertewertebereich weist einen oberen und einen unteren Referenzwert auf. In dem Beispiel in Figur 3 weist der Referenzwertebereich einen oberen Referenzwert von 3000 und einen unteren Referenzwert von 300 auf.

Bei der Auswertung wird nun bspw. geprüft, ob die ermittelte Differenz oberhalb, unterhalb oder innerhalb des Referenzwertebereichs liegt, und wenn das Ergebnis der Prüfung zeigt, dass die Differenz oberhalb des Referenzwertebereichs liegt, dann ist die Verriegelungsvorrichtung 10 im geschlossenen bzw. verriegelten Zustand. Wenn das Ergebnis der Prüfung zeigt, dass die Differenz unterhalb des Referenzwertebereichs liegt, dann ist die Verriegelungsvorrichtung 10 im offenen Zustand. Wenn das Ergebnis der Prüfung zeigt, dass die Differenz innerhalb des Referenzwertebereichs liegt, dann ist der Zustand der Verriegelungsvorrichtung 10 gestört. In der verriegelten Position ohne Luftspalt 16 in Figur 3 sind die Zeiten t₁ und t₂ deutlich unterschiedlich, d. h. die Differenz größer.

Figur 4 stellt schematisch das Bestimmen der Position des Hubmagneten 11 in einem entriegelten Zustand der Verriegelungsvorrichtung 10 dar. Im Unterschied zu Figur 3 kann im entriegelten Zustand der Verriegelungsvorrichtung 10 in Figur 4 der Einfluss des Permanentmagneten 14 auf das erfindungsgemäße Verfahren 100 nicht so stark festgestellt werden, was am Luftspalt 16 zwischen Permanentmagnet 14 und dem Tauchkern 13 liegt. Somit ist hier der Einfluss vernachlässigbar. Ferner sind die ermittelten Zeitdauern t₁ und t₂ annähernd gleich, d. h. die Differenz ist klein.

In einem weiteren Ausführungsbeispiel (nicht abgebildet) kann das Bestimmen der Position des Hubmagneten 11 der Verriegelungsvorrichtung 10 alternativ unter Verwendung eines Amplitudenwerts des jeweiligen Stromimpulses als Messwert ausgeführt werden. Im Unterschied zur Bestimmung der Zeitdauern t₁, t₂ bei der als Schalteinheit der Steuereinrichtung 20 als ein Komparator ausgeführt ist, wird bei der Bestimmung der Stromamplitudenwerte des jeweiligen Stromimpulses ein A/D-Wandler als Schalteinheit verwendet, um die Bestimmung der Messwerte zu ermöglichen. Ferner weisen die jeweiligen Stromimpulse eine gleiche Impulsbreite auf.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Rotorspinnmaschine
- 2: Spinnstelle

- 10: Verriegelungsvorrichtung
- 11: Hubmagnet
- 12: Spule
- 13: Tauchkern
- 14: Permanentmagnet
- 15: Zentrierbuchse
- 16: Luftspalt
- 17: Joch

- 20: Steuereinrichtung
- 25: Speichermedium

- 50: Computerprogramm

- 100: Verfahren
- 101: Erzeugen zweier Stromimpulse
- 102: Bestimmen jeweils eines Messwerts
- 103: Ermitteln einer Differenz
- 104: Auswerten der Differenz
- 105: Feststellen eines Zustands der Verriegelungsvorrichtung

## Patentansprüche

1. Verfahren (100) zum Überwachen eines Zustands einer elektromagnetischen Verriegelungsvorrichtung (10) für eine Spinnstelle (2) einer Rotorspinnmaschine (1), umfassend die nachfolgenden Schritte:
- Erzeugen (101) zweier Stromimpulse in einer zeitlichen Abfolge, wobei ein zweiter Stromimpuls eine einem ersten Stromimpuls im Vorzeichen entgegengesetzte Amplitude aufweist, wobei die zeitliche Abfolge durch eine Schalteinheit einer Steuereinrichtung (20) der Spinnstelle (2) gesteuert wird,
- Bestimmen (102) jeweils eines Messwerts bezüglich der jeweiligen Stromimpulse in Abhängigkeit von einem Schaltvorgang durch die Schalteinheit,
- Ermitteln (103) einer Differenz zwischen den jeweiligen Messwerten,
- Auswerten (104) der Differenz auf Basis eines Vergleichs mit einem Referenzwertebereich, wobei der Referenzwertebereich spezifisch dafür ist, ob sich die Verriegelungsvorrichtung (10) in einem geschlossenen oder offenen Zustand befindet,
- Feststellen (105) eines Zustands der Verriegelungsvorrichtung (10) in Abhängigkeit von dem Ergebnis des Auswertens (104).

2. Verfahren (100) nach Anspruch 1, **dadurch gekennzeichnet, dass** das Bestimmen (102) des Messwerts den nachfolgenden Schritt umfasst:
- Bestimmen einer Zeitdauer tₓ eines Anstiegs des jeweiligen Stromimpulses als Messwert in Abhängigkeit von dem Schaltvorgang durch die Schalteinheit,
wobei der Schaltvorgang beim Erreichen eines festgelegten Stromwertes oder eines korrespondierenden Spannungswertes durch die Schalteinheit erfolgt.

3. Verfahren (100) nach Anspruch 1, **dadurch gekennzeichnet, dass** das Bestimmen (102) des Messwerts den nachfolgenden Schritt umfasst:
- Bestimmen eines Amplitudenwerts des jeweiligen Stromimpulses als Messwert in Abhängigkeit von dem Schaltvorgang durch die Schalteinheit, wobei der Schaltvorgang durch die Schalteinheit beim Erreichen einer festgelegten Zeitdauer des Stromimpulses erfolgt.

4. Verfahren (100) nach einem der vorhergehenden Ansprüche, **dadurch gekennzeichnet, dass** das Auswerten (104) den weiteren nachfolgenden Schritt umfasst:
- Prüfen, ob die ermittelte (103) Differenz oberhalb, unterhalb oder innerhalb des Referenzwertebereichs liegt, wobei der Referenzwertebereich durch einen oberen und einen unteren Referenzwert definiert ist, und,
wenn das Ergebnis der Prüfung zeigt, dass die Differenz oberhalb des Referenzwertebereichs liegt, dann ist die Verriegelungsvorrichtung (10) im geschlossenen Zustand, oder,
wenn das Ergebnis der Prüfung zeigt, dass die Differenz unterhalb des Referenzwertebereichs liegt, dann ist die Verriegelungsvorrichtung (10) im offenen Zustand, oder,
wenn das Ergebnis der Prüfung zeigt, dass die Differenz innerhalb des Referenzwertebereichs liegt, dann ist der Zustand der Verriegelungsvorrichtung (10) gestört.

5. Verfahren (100) nach einem der vorhergehenden Ansprüche, **dadurch gekennzeichnet, dass** der Referenzwertebereich in Abhängigkeit der elektromagnetischen Eigenschaften eines Hubmagneten (11) der Verriegelungsvorrichtung (10) spezifiziert ist.

6. Verfahren (100) nach einem der vorhergehenden Ansprüche, **dadurch gekennzeichnet, dass** der Referenzwertebereich durch einen oberen und einen unteren Referenzwert definiert ist, wobei der obere Referenzwert einem Wert von 3000 und der untere Referenzwert einem Wert von 300 entspricht.

7. Verfahren (100) nach einem der vorhergehenden Ansprüche, **dadurch gekennzeichnet, dass** das Verfahren (100) den nachfolgenden Schritt umfasst:
- Initiieren einer Ausgabe wenigstens einer Zustandsinformation basierend auf dem festgestellten Zustand.

8. Verfahren (100) nach Anspruch 7, **dadurch gekennzeichnet, dass** die Zustandsinformation eine Anweisung zur Unterstützung eines Benutzers der Rotorspinnmaschine (1) umfasst, wobei das Initiieren der Ausgabe zumindest einen der nachfolgenden Schritte umfasst:
- Initiieren einer Aktivierung einer optischen Anzeige an der Rotorspinnmaschine (1) und/oder an der entsprechenden Spinnstelle (2),
- Initiieren einer Anzeige auf einer Benutzeroberfläche der Steuereinrichtung (20), wobei die Benutzeroberfläche einen digitalen Zwilling zumindest eines Teils der Rotorspinnmaschine (1) visualisiert,
- Initiieren einer akustischen Ausgabe bezüglich des Zustands der Verriegelungsvorrichtung (10) der Rotorspinnmaschine (1), insbesondere eines Warnsignals.

9. Verfahren (100) nach einem der vorhergehenden Ansprüche, **dadurch gekennzeichnet, dass** das Verfahren (100) den nachfolgenden weiteren Schritt umfasst:
- Weiterleiten des festgestellten (105) Zustands der Verriegelungsvorrichtung (10) als Steuersignal an eine Master-Steuereinrichtung zur Steuerung eines Rotormotors der Spinnstelle (2), wobei die Steuerung des Rotormotors durch ein Anschalten und/oder Abschalten des Rotormotors erfolgt.

10. Verfahren (100) nach einem der vorhergehenden Ansprüche, **dadurch gekennzeichnet, dass** das Ermitteln (103) der Differenz zwischen den jeweiligen Messwerten in Abhängigkeit einer durch den jeweiligen Stromimpuls induzierten Spannung in der Verriegelungsvorrichtung (10) erfolgt.

11. Verfahren (100) nach einem der vorhergehenden Ansprüche, **dadurch gekennzeichnet, dass** die Schalteinheit einen Komparator und/oder einen A/D-Wandler aufweist, um die zeitliche Abfolge des jeweiligen Stromimpulses in Abhängigkeit von dem Schaltvorgang zu steuern.

12. Rotorspinnmaschine (1) umfassend wenigstens eine Spinnstelle (2), eine Steuereinrichtung (20) zum Überwachen eines Zustands einer Verriegelungsvorrichtung (10) für die Spinnstelle (2), **dadurch gekennzeichnet, dass** die Steuereinrichtung (20) dazu ausgebildet ist das Verfahren (100) nach einem der vorhergehenden Ansprüche durchzuführen.

13. Computerprogramm (50), umfassend Befehle, die bei der Ausführung des Computerprogramms (50) durch einen Computer einer Steuereinrichtung (20) diesen veranlassen, das Verfahren (100) nach einem der Ansprüche 1 bis 11 auszuführen.

14. Vorrichtung (20) zur Datenverarbeitung, umfassend Mittel zur Ausführung des Verfahrens (100) nach einem der Ansprüche 1 bis 11.
